(19) Europäisches Patentamt
European Patent Office
Office européen des brevets

(11) Veröffentlichungsnummer: **0 022 424**
**A1**

(12) # EUROPÄISCHE PATENTANMELDUNG

(21) Anmeldenummer: 80810104.2

(22) Anmeldetag: 28.03.80

(51) Int. Cl.³: **C 07 F 9/90**
C 08 K 5/59, C 08 L 27/04

(30) Priorität: 03.04.79 CH 3091/79

(43) Veröffentlichungstag der Anmeldung: 14.01.81 Patentblatt 81/2

(84) Benannte Vertragsstaaten: BE DE FR GB IT NL

(71) Anmelder: CIBA-GEIGY AG
Patentabteilung Postfach
CH-4002 Basel(CH)

(72) Erfinder: Michaelis, Klaus-Peter, Dr.
Am Hangweg 8
D-6145 Lindenfels/Odenwald(DE)

(54) **Organoantimonverbindungen, ihre Verwendung als Stabilisatoren und stabilisierte Polymere.**

(57) Organoantimonverbindungen der Formel I

$$Sb-(S-CH_2\underset{\displaystyle |\atop\displaystyle OR}{CH}CH_2XR')_3 \qquad (I)$$

worin R H oder $C_1$-$C_{18}$-Acyl ist, R' $C_{1-20}$-Alkyl oder $C_{1-18}$-Acyl ist, und X S oder O ist, als Stabilisatoren für halogenhaltige Polymere.

EP 0 022 424 A1

Croydon Printing Company Ltd

CIBA-GEIGY AG
Base (Schweiz) 3-12289/+

BEZEICHNUNG GEÄNDERT
siehe Titelseite

# Neue Organoantimonverbindungen

Die Erfindung betrifft neue Organoantimonverbindungen, ihre Herstellung, ihre Verwendung als Stabilisatoren für halogenhaltige Polymere, sowie die so stabilisierten Polymere.

Organoantimonverbindungen sind als Stabilisatoren für PVC bekannt. In der praktischen Anwendung sind diese bekannten Organoantimon-Stabilisatoren jedoch nicht immer zufriedenstellend, insbesondere hinsichtlich Lagerstabilität, Geruchsfreiheit, Verarbeitungseigenschaften bei erhöhter Temperatur, thermischer Beständigkeit sowie im Fall spezieller Verarbeitungen, wie etwa bei einer Rohrrezeptur.

Aufgabe der vorliegenden Erfindung war es, diese Nachteile des Standes der Technik zu vermeiden und Stabilisatoren zu schaffen, die diese Nachteile nicht oder nur in geringerem Ausmass aufweisen.

Demgemäss betrifft die Erfindung Organoantimonverbindungen der Formel I

$$Sb-(S-CH_2\underset{\displaystyle OR}{\underset{|}{C}}HCH_2XR')_3 \qquad (I)$$

worin R H oder $C_1$-$C_{18}$-Acyl ist, R' $C_{1-20}$-Alkyl oder $C_1$-$_{18}$-Acyl ist, und X = S oder O ist.

Der Rest R/R' ist als $C_{1-18}$-Acyl bevorzugt $C_1$-$C_{18}$-Alkanoyl, $C_7$-$C_{11}$-Aroyl oder auch $C_4$-$C_{18}$-Alkoxycarbonylalkanoyl, wie Benzoyl, tert.-Butylbenzoyl, ein ($C_1$-$C_8$-Alkyl)-maleinsäurehalbester, wie Methylmaleinsäurehalbester, oder vor allem Acetyl oder Propionyl. Ebenso bevorzugt ist Acyl R aber auch Acetoacetyl. Die Reste R und R' sind unabhängig voneinander, wobei R' als Acyl insbesondere auch längerkettiges Alkanoyl ist, wie solches mit 8-18 C-Atomen, wie Dodecanoyl oder insbesondere Decanoyl.

X kann O oder S sein, ist aber bevorzugt O.

R' ist als $C_1$-$C_{20}$-Alkyl geradkettig oder insbesondere verzweigt, bevorzugt $C_{8-20}$-Alkyl, wie Dodecyl, Tetradecyl oder Octadecyl, insbesondere auch verzweigte derartige Reste, und vor allem iso-Octyl.

Bevorzugt sind also Verbindungen der Formel I, worin R $C_{1-18}$-Alkanoyl oder Acetoacetyl ist, R' $C_{8-20}$-Alkyl oder $C_{8-18}$-Alkanoyl ist, und X O ist.

Vor allem bevorzugt sind Verbindungen derFormel I, worin R Acetyl, Propionyl oder Acetoacetyl ist, R' $C_{8-20}$-Alkyl oder $C_{8-18}$-Alkanoyl ist, und X O ist.

Ganz besonders bevorzugt sind Verbindungen der Formel

I, worin R Acetyl, Propionyl oder Acetoacetyl ist, R' $C_8$, $C_{10}$, $C_{12}$, $C_{14}$, $C_{16}$ oder $C_{18}$ Alkyl oder $C_8$, $C_{10}$, $C_{12}$ oder $C_{18}$ Alkanoyl ist, und X O ist, sowie die in den Beispielen genannten Verbindungen.

Die Herstellung der Verbindungen der Formel I kann nach an sich bekannten Methoden erfolgen, z.B. indem man ein Antimonhalogenid, insbesondere Antimontrichlorid, mit einem Monothioglycerinester der Formel II

$$HS\text{-}CH_2\underset{|}{\overset{}{C}}HCH_2\text{-}XR' \qquad (II)$$
$$\qquad OR$$

umsetzt, worin R, R' und X obige Bedeutung hat. Die Umsetzung erfolgt bevorzugt in einem Lösungsmittel, insbesondere einem halogenierten Kohlenwasserstoff, wie Chloroform, vorzugsweise in Gegenwart eines Säureakzeptors, wie Natriumhydrogencarbonat und unter Erwärmen. Das entstehende Wasser wird am Wasserabscheider entfernt und das Lösungsmittel vorteilhaft abgedampft.

Die erfindungsgemässen Stabilisatoren eignen sich hervorragend zum Schutz gegen den Abbau durch Wärme- und Lichteinwirkung von chlorhaltigen Thermoplasten. Im allgemeinen werden dem Kunststoff Verbindungen der Formel I in Mengen von 0,01 bis 10, vorzugsweise 0,1 bis 5 Gew.-% einverleibt. Ein weiterer Gegenstand vorliegender Erfindung sind damit thermoplastische Formmassen, enthaltend 0,01 bis 10 Gew.-%, bezogen auf die thermoplastische Mischung eines Stabilisators der Formel I.

Als chlorhaltige Thermoplaste seien genannt: Polyvinylidenchlorid, nachchlorierte Polyolefine und bevorzugt Polymere aus oder auf der Grundlage von Vinylchlorid. Als solche kommen E-, S- und M-PVC in Frage,

wobei das Polyvinylchlorid auch weichmacherhaltig und nachchloriert sein kann. Insbesondere ist jedoch Hart-PVC bevorzugt, aus dem z.B. Fertigteile für die Aussenanwendung nach bekannten Verfahren wie Spritzgiessen oder Extrudieren hergestellt werden können.

Als Comonomere für Thermoplaste auf der Grundlage von Vinylchlorid seien genannt: Vinylidenchlorid, Transdichloräthen, Aethylen, Propylen, Butylen, Maleinsäure, Acrylsäure, Fumarsäure, Itaconsäure oder Vinylacetat.

Vor, während oder nach der Zugabe des erfindungsgemässen Stabilisators können je nach Verwendungszweck der Formmasse weitere Zusätze einverleibt werden, wie weitere Stabilisatoren, Gleitmittel, bevorzugt Montanwachse oder Glycerinester, Füllstoffe, verstärkende Füllstoffe, wie Glasfasern, und Modifikatoren, wie etwa Schlagzähzusätze.

Die nachfolgenden Beispiele erläutern die Erfindung näher. Teile sind Gewichtsteile und Prozente Gewichtsprozente.

Herstellung der Ausgangsstoffe:

Beispiel 1 : In 250 ml Methanol werden 5 g festes Natriumhydrogensulfid-Monohydrat bei Raumtemperatur mit Schwefelwasserstoff gesättigt. Man tropft anschliessend innerhalb 2 h 1 Mol (186 g) 2-Aethylhexylglycidyläther unter gleichzeitigem Einleiten von Schwefelwasserstoffgas und unter intensivem Rühren bei Raumtemperatur zu. Den Schwefelwasserstoffstrom leitet man ständig in der Menge ein, den die Reaktionslösung gerade aufnehmen kann. Die Temperatur sollte 30 - 40° C nicht überschreiten, um die Bildung entsprechender Thioäther wirksam zu unterbinden. Nach Abreagieren des Epoxids zerstört man den Katalysator mit wenig verdünnter Schwefelsäure, extrahiert mit Aether, wäscht mit Wasser neutral und entfernt nach Trocknen über Magnesiumsulfat das Lösungsmittel. Nach Destillation bei 75° C / $10^{-3}$ Torr erhält man den reinen Monothioglycerin-2-äthylhexyläther mit einem SH-Gehalt von 14,8 %.

Beispiel 2: Entsprechend den Bedingungen in Beispiel 1 lassen sich in 250 ml Methanol innerhalb von 1,5 h 228 g (1 Mol) "CARDURA-E-10"-Epoxid $\overset{O}{CH_2CH}CH_2-O-COC_{8-10}H_{17-21}$ mit 5 g Natriumhydrogensulfid-Monohydrat als Katalysator und Schwefelwasserstoff zum entsprechenden Monothioglycerinmonoester umsetzen. Das Produkt lässt sich bei 110° C / $10^{-2}$ Torr destillieren, SH-Gehalt: 13,4 %.

Beispiel 3: 1 Mol des im Beispiel 1 beschriebenen Monothioglycerinäthers verdünnt man mit 110 g Acetanhydrid. In diese Lösung tropft man unter Eiswasserkühlung 15 ml conz. Schwefelsäure. Die Temperatur sollte 40° C nicht überschreiten. Nach 1 h Rühren verdünnt man mit Wasser,

extrahiert mit Aether, wäscht mit gesättigter Natriumhydrogencarbonatlösung neutral und erhält den Thioglycerinester als geruchloses Oel nach Destillation bei 85° C / $4.10^{-3}$ Torr mit einem SH-Gehalt von 11,6 %.

Beispiel 4: Wie im Beispiel 3 beschrieben, reagiert der Monothioglycerinäther mit Propionsäureanhydrid zum entsprechenden Propionsäureester. Man erhält das geruchsfreie Produkt mit einem SH-Gehalt von 10,8 %.

Beispiel 5: 220 g Thioglycerinäther aus Beispiel 1 werden mit 200 ml Acetessigsäureäthylester versetzt und solange erhitzt bis insgesamt 50 ml Aethanol abdestillieren. Man entfernt anschliessend nicht umgesetzten Acetessigester im Wasserstrahlvakuum und erhält den acetoacetylierten Thioglycerinäther als farb- und geruchlose Verbindung mit einem SH-Gehalt von 9,8 %.

Beispiel 6: 262 g des im Beispiel 2 dargestellten Thioglycerinmonoesters werden gemäss Beispiel 3 mit Acetanhydrid umgesetzt. Der erhaltene Thioglycerindiester lässt sich bei 120° C / $10^{-3}$ Torr destillieren und ist ein vollkommen geruchsfreies Mercaptan mit einem SH-Gehalt von 10,6 %.

Beispiel 7: 260 g des im Beispiel 2 beschriebenen Thioglycerinmonoesters werden gemäss Beispiel 4 mit Propionsäureanhydrid umgesetzt. Der Thioglycerindiester ist ebenfalls völlig geruchlos und zeigt einen SH-Gehalt von 9,8 %.

Beispiel 8: 260 g Thioglycerinmonoester des Beispiels 2 werden mit Acetessigsäureäthylester analog Beispiel 5 umgeestert. Das acetoacetylierte Produkt erhält man als völlig geruchsfreies Mercaptan mit einem SH-Gehalt von 8,9 %.

Erfindungsgemässe Endstoffe:

Beispiel 9: Die in den Beispielen 1-8 beschriebenen Thioglycerinderivate lassen sich nach der folgenden allg. Vorschrift in antimonorganische Verbindungen überführen: 1/3 Mol (76 g) Antimontrichlorid werden mit 1 Mol Mercaptan in 200 ml Chloroform gelöst. Dazu fügt man 1 Mol Natriumhydrogencarbonat als Säurefänger. Anschliessend erwärmt man und schleppt das Wasser am Wasserabscheider ab. Nach Abkühlen filtriert man vom Kochsalz ab und entfernt das Lösungsmittel im Vakuum. Die auf diesem Wege erhaltenen Antimonmercaptide sind geruchlose, viskose Flüssigkeiten. Ihre Eigenschaften sind in der folgenden Tabelle zusammengestellt.

| Strukturformel | $n_D^{20}$ | IR Sb-S | NMR*) | Eigenschaften |
|---|---|---|---|---|
| a) $Sb-(SCH_2CH(OH)CH_2O-CH_2CH(CH_2CH_3)CH_2CH_2CH_2CH_3)_3$ | 1.5248 | 755 | ident. | farb- und geruchlose viskose Flüssigkeit |
| b) $Sb-(SCH_2CH(OH)CH_2O-COC_{8-10}H_{17-21})_3$ | 1.5199 | 755 | ident. | " |
| c) $Sb-(SCH_2CHCH_2O-CH_2CH(CH_2CH_3)CH_2CH_2CH_2CH_3)_3$<br>$OCOCH_3$ | 1.5088 | 755 | ident. | " |
| d) $Sb-(SCH_2CHCH_2O-CH_2CH(CH_2CH_3)CH_2CH_2CH_2CH_3)_3$<br>$OCOCH_2CH_3$ | 1.5128 | 755 | ident. | " |
| e) $Sb-(SCH_2CHCH_2O-CH_2CH(CH_2CH_3)CH_2CH_2CH_2CH_3)_3$<br>$OCOCH_2COCH_3$ | 1.4978 | 755 | ident. | " |
| f) $Sb(SCH_2CHCH_2O-COC_{8-10}H_{17-21})_3$<br>$OCOCH_3$ | 1.5020 | 755 | ident. | " |
| g) $Sb-(SCH_2CHCH_2O-COC_{8-10}H_{17-21})_3$<br>$OCOCH_2CH_3$ | 1.5127 | 755 | ident. | " |
| h) $Sb-(SCH_2CHCH_2-O-COC_{8-10}H_{17-21})_3$<br>$OCOCH_2COCH_3$ | 1.5108 | 755 | ident. | " |

*) NMR bis auf SH-Proton identisch mit Ausgangsmercaptan

Beispiel 10 : Eine zur Herstellung von Prüfmustern geeignete Rezeptur hatte folgenden Aufbau:

| | | |
|---|---|---|
| S-PVC | 100,0 | Teile |
| Paraffinwachs | 0,2 | Teile |
| Calcium-Stearat | 1,0 | Teile |
| Antimonmercaptid | 0,3 | Teile |

Nach intensiver Vormischung der Compounds wurde bei 180° C eine 1 mm starke Pressplatte hergestellt, deren Verfärbung gemessen wurde (Yellowness-Index):

| | Yellowness-Index |
|---|---|
| ohne Stabilisator | 64,4 |
| 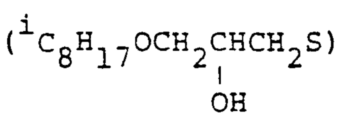 | 11,8 |
| 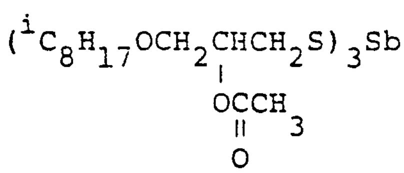 | 11,3 |
| 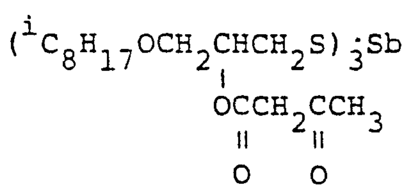 | 14,8 |
| 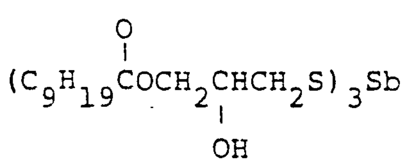 | 10,5 |
| 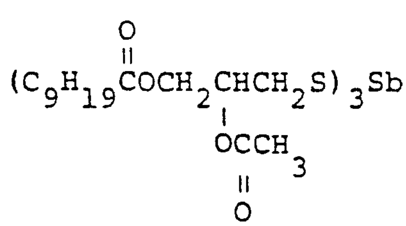 | 11,8 |

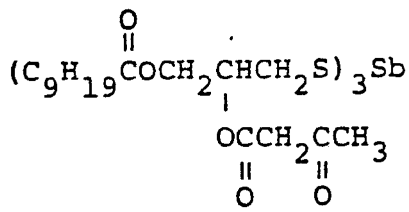

20,6

Patentansprüche

1. Organoantimonverbindungen der Formel I

$$Sb\text{-}(S\text{-}CH_2\underset{\displaystyle OR}{\underset{|}{C}}HCH_2XR')_3 \qquad (I)$$

worin R H oder $C_{1-18}$-Acyl ist, R' $C_{1-20}$-Alkyl oder $C_{1-18}$-Acyl ist, und X S oder O ist.

2. Verbindungen der Formel I nach Anspruch 1, worin R $C_1$-$C_{18}$-Alkanoyl oder Acetoacetyl ist, R' $C_{8-20}$-Alkyl oder $C_{8-18}$-Alkanoyl ist, und X O ist.

3. Verbindungen der Formel I nach Anspruch 1, worin R Acetyl, Propionyl oder Acetoacetyl ist, R' $C_{8-20}$ Alkyl oder $C_{8-18}$Alkanoyl ist, und X O ist.

4. Verbindungen der Formel I nach Anspruch 1, worin R Acetyl, Propionyl oder Acetoacetyl ist, R' $C_8$, $C_{10}$, $C_{12}$, $C_{14}$, $C_{16}$ oder $C_{18}$ Alkyl oder $C_8$, $C_{10}$, $C_{12}$ oder $C_{18}$ Alkanoyl ist, und X O ist.

5. Verbindung nach Anspruch 1, nämlich $Sb\text{-}(SCH_2CH(OH)CH_2O\text{-}CH_2CH(CH_2CH_3)CH_2CH_2CH_2CH_3)_3$.

6. Verbindung nach Anspruch 1, nämlich $Sb\text{-}(SCH_2CH(OH)CH_2O\text{-}COC_{8-10}H_{17-21})_3$.

7. Verbindung nach Anspruch 1, nämlich

$$Sb\text{-}(SCH_2\underset{\displaystyle OCOCH_2COCH_3}{\underset{|}{C}}HCH_2\text{-}O\text{-}COC_{8-10}H_{17-21})_3 .$$

8. Verwendung von Verbindungen der Formel I nach einem der Ansprüche 1 bis 7 zur Stabilisierung von chlorhaltigen Polymeren.

9. Chlorhaltige Polymere, stabilisiert mit einer Verbindung nach einem der Ansprüche 1 bis 7.

0022424

Europäisches Patentamt

# EUROPÄISCHER RECHERCHENBERICHT

Nummer der Anmeldung

EP 80 81 0104.2

| EINSCHLÄGIGE DOKUMENTE | | | KLASSIFIKATION DER ANMELDUNG (Int Cl.3) |
|---|---|---|---|
| Kategorie | Kennzeichnung des Dokuments mit Angabe soweit erforderlich, der maßgeblichen Teile | betrifft Anspruch | |
| A | DE - A1 - 2 825 472 (DART INDUSTRIES)<br>-- | | C 07 F 9/90<br>C 08 K 5/59<br>C 08 L 27/04 |
| A | DE - A1 - 2 822 508 (PENNWALT CORP.)<br>-- | | |
| A | DE - A1 - 2 602 726 (CIBA-GEIGY)<br>-- | | |
| A | US - A - 3 466 261 (HOECHST)<br>-- | | RECHERCHIERTE SACHGEBIETE (Int Cl.3) |
| A | US - A - 2 629 724 (ABBOT LABORATORIES)<br>---- | | C 07 F 9/90<br>C 08 K 5/59<br>C 08 L 27/04<br>C 08 L 27/06 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Berlin | 07-08-1980 | KAPTEYN |